# EUROPÄISCHE PATENTSCHRIFT

(11) **EP 0 501 176 B1**
(45) Veröffentlichungstag und Bekanntmachung des Hinweises auf die Patenterteilung: **08.05.1996**
(21) Anmeldenummer: 92101750.5
(22) Anmeldetag: 03.02.1992
(51) Int. Cl.: C08L 67/06, C08L 31/04

(54) **Eingedickte härtbare Formmasse aus ungesättigten Polyesterharzen**
Thickened curable moulding composition from unsaturated polyester resins
Composition à mouler durcissable épaissie de résines polyesters insaturés

(30) Priorität: 28.02.1991 DE 4106341
(43) Veröffentlichungstag der Anmeldung: 02.09.1992
(73) Patentinhaber: BASF Aktiengesellschaft, D-67063 Ludwigshafen (DE)
(72) Erfinder: Hesse, Anton, Dr., W-6940 Weinheim (DE); Buhl, Dieter, W-6710 Frankenthal (DE); Potthoff-Karl, Birgit, Dr., W-6700 Ludwigshafen (DE); Sanner, Axel, Dr., W-6710 Frankenthal (DE)

(56) Entgegenhaltungen:
- EP-A- 0 107 031
- EP-A- 0 319 203
- EP-A- 0 414 468
- US-A- 3 883 612
- US-E- 31 975

## Beschreibung

Die Erfindung betrifft eine eingedickte, unvernetzte Polyesterharz-Formmasse, die bei Temperaturen oberhalb von 50°C radikalisch härtbar ist.

Eingedickte, härtbare Formmassen sind Halbzeuge, die lagerstabil und verformbar sind und die nach der Verformung zu Formteilen aushärtbar sind. Beispiele sind "sheet molding compounds" (SMC) und "bulk molding compounds" (BMC), die ungesättigte Polyester und Monomere ("UP-Harze"), sowie Verstärkungsfasern und Füllstoffe enthalten. Ihre Herstellung und Verarbeitung ist beispielsweise in der Monographie von P.F. Bruins, "Unsaturated Polyester Technology", Gordon and Breach Science Publishers 1976, Seiten 211 bis 238, beschrieben. Die herkömmliche Eindickung von SMC-Massen mit Erdalkalioxiden oder -hydroxiden basiert auf der Salzbildung mit den Polyestercarboxylgruppen. Flüssige Reaktivsysteme, die keine oder nur sehr wenig Säuregruppen aufweisen, lassen sich daher nicht in der SMC-Technik einsetzen. Zahlreiche UP-Harze - insbesondere die flexiblen - dicken trotz Carboxylgruppengehalt entweder gar nicht oder nur ungenügend ein. Mit Hilfe dieses Eindickverfahrens läßt sich deshalb nur ein Teil flüssiger Reaktivsysteme der SMC-Technik zugänglich machen.

In EP-A 308 745 ist ein Eindickmittelsystem auf Basis von Diisocyanaten und Aminobenzoesäurederivaten beschrieben, mit dem auch carboxylgruppenfreie Reaktivharze eingedickt werden können. Derartige Systeme sind aber feuchtigkeitsempfindlich und in der Handhabung problematisch. Der Erfindung lag also die Aufgabe zugrunde, ein einfach handzuhabendes Eindickmittelsystem zu entwikkeln, mit dem auch gar nicht oder nur schwierig eindickfähige ungesättigte Polyesterharze eingedickt werden können.

Diese Aufgabe wird erfindungsgemäß dadurch gelöst, daß dem ungesättigten Polyesterharz 0,1 bis 20 %, bezogen auf sein Gewicht, eines mit dem Harz verträglichen, Säuregruppen enthaltenden thermoplastischen Vinylpolymeren mit einer Säurezahl zwischen 20 und 150 und einem K-Wert zwischen 15 und 60 zugemischt und die Eindickung mit üblichen Eindickmitteln auf Basis einer Metallverbindung vorgenommen wird.

Gegenstand der Erfindung ist demzufolge eine härtbare, eingedickte Formmasse, enthaltend
A. 100 Gew.-Teile eines ungesättigten Polyesterharzes, welches ohne Zusatz des Vinylpolymeren B mit der basischen Metallverbindung C allein nicht klebfrei eindickt, ausgewählt aus:
   I. einer styrolischen Lösung eines ungesättigten Polyesters, der entweder
      a. Cycloalkenyl- oder Cycloalkylgruppen enthält oder
      b. eine Säurezahl von weniger als 20 aufweist, und
   II. einer Lösung eines ungesättigten Polyesters in einem Hydroxylgruppen enthaltenden Monomeren.
B. 0,1 bis 20 Gew.-Teile eines mit A verträglichen, Säuregruppen enthaltenden thermoplastischen Vinylpolymeren mit einer Säurezahl (nach DIN 53 402) zwischen 20 und 150 und einem K-Wert (nach DIN 51 562, Teile 1 und 3) zwischen 15 und 60,
C. 0,1 bis 10 Gew.-Teile einer basischen Metallverbindung als Eindickmittel,
D. 0,01 bis 5 Gew.-Teile eines Polymerisationsinitiators, dessen Halbwertszeit bei 50°C größer als 100 h ist,
E. 10 bis 400 Gew.-Teile Verstärkungsfasern und/oder Füllstoffe.

Bei der Eindickung mit dem erfindungsgemäßen Eindicksystem werden nach kurzer Lagerzeit Formmassen mit klebfreier Oberfläche und guter Fließfähigkeit erhalten, die über Wochen nahezu konstant bleibt. Geschwindigkeit und Ausmaß der Eindickung lassen sich durch Säurezahl, K-Wert und Konzentration der Polymerkomponente B sowie durch Konzentration und Löslichkeit des gebildeten Metallsalzes im Harzsystem steuern.

In DE-B 1 953 062 (GB 1 276 198) und in DE-B 2 104 575 (US 3 718 714) sind Formmassen aus ungesättigten Polyesterharzen beschrieben, die ein Eindickmittel sowie ein thermoplastisches Polymer enthalten, welches 0,1 bis 5 Gew.-% Säuregruppen aufweist. Beispiele für Säuregruppen enthaltende Polymere sind Carboxylgruppen enthaltende Methylmethacrylat- und Vinylacetat-Polymerisate. Diese "low-profile"-Additive sollen den Schwund und die Oberflächeneigenschaften von ausgehärteten Formteilen verbessern. Von einem Einfluß auf die Eindickfähigkeit der Polyesterharze ist nicht die Rede. Methylmethacrylat-Polymerisate sind mit ungesättigten Polyesterharzen unverträglich, stellen also keine wirksamen Zusätze im Sinne der vorliegenden Erfindung dar. Die Säurezahlen der in DE-B 21 04 575 beispielhaft genannten Vinylpolymeren liegen durchweg zwischen 5 und 15. Mit Polymeren, die eine derart niedrige Säurezahl aufweisen, ist aber eine klebfreie Eindickung im Sinne der vorliegenden Erfindung nicht möglich. Andererseits ist es für eine Schrumpfkompensation im Sinne der DE-B 21 04 575 erforderlich, daß die Säurezahl der Vinylacetatpolymeren deutlich unter 20 liegt. Ist die Säurezahl höher, dann erhält man nach der Härtung Formkörper mit unruhiger, rauher Oberfläche. Die genannte Druckschrift kann also nicht die Lehre erteilen, ungesättigten Polyesterharzen Vinylacetatpolymere mit einer Säurezahl über 20 zuzusetzen.

EP-A 319 203 betrifft ungesättigte Polyesterharze, denen als low-profile-Komponenten säuremodifizierte Vinylacetat-Copolymere mit einer Säurezahl zwischen 5 und 35, zusammen mit einem Calciumsalz einer höheren Fettsäure zugesetzt werden. Durch diese Zusätze soll der Formkörperschrumpf reduziert und die Oberflächenglätte verbessert werden. Bei den dort beschriebenen ungesättigten Polyesterharzen handelt es sich um ganz normale Polyesterharze; das in allen Beispielen eingesetzte Polyesterharz läßt sich auch ohne Zusatz eines thermoplastischen Vinylpolymeren mit einer Säurezahl von mindestens 20 problemlos mit Magnesiumoxid eindicken.

Zu den Ausgangsmaterialien ist folgendes zu sagen:
A. Die ungesättigten Polyesterharze sind Lösungen von ungesättigten Polyestern in copolymerisierbaren Monomeren, wobei Monomer-Gehalte von 20 bis 60 Gew.-% üblich sind. Geeignete Polyester sind die bekannten Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.
   Als copolymerisierbare Monomere kommen die üblichen Allyl- und Vinylverbindungen in Frage, vorzugsweise Styrol.
   Die Säurezahl des ungesättigten Polyesterharzes sollte unterhalb von 100, insbesondere zwischen 10 und 60 liegen, ihr mittleres Molekulargewicht zwischen 500 und 5000. Besonders bevorzugt sind Polyesterharze aus Maleinsäure, gegebenenfalls zusammen mit o-Phthalsäure oder Isophthalsäure einerseits und Diolen, wie Dipropylenglykol, Diethylenglykol, Ethylenglykol, Neopentylglykol und/oder Propandiol-1,2 andererseits, gelöst in Styrol.
   Folgende ungesättigte Polyesterharze sind bevorzugt:
   1. Styrolische Lösungen von Cycloalkenyl- oder Cycloalkylgruppen enthaltenden ungesättigten Polyestern. Als Cycloalkenylgruppen kommen insbesondere Cyclopenten- und Cyclohexengruppen in Frage.
      Zum Einbau der Cyclopenten- und Cyclohexen-Gruppierungen in die ungesättigten Polyester werden diese mit Dicyclopentadien bzw. dessen Derivaten oder Substitutionsprodukten modifiziert, vorzugsweise mit Dicyclopentadien, Endomethylentetrahydrophthalsäure, N-Hydroxyalkyltetrahydrophthalimid oder N-Hydroxyalkylendomethylentetrahydrophthalimid, daneben aber auch mit hydriertem Bisphenol A oder Cyclohexandimethanol. Diese Umsetzungen sind bekannt, z.B. aus W. Meyer, Kunststoffe 66, S. 436, (1976). Wenn man von Diestern mit hoher Säurezahl oder freier Maleinsäure ausgeht und bei Temperaturen zwischen 120 und 140°C arbeitet, erhält man im wesentlichen eine Addition des Dicyclopentadiens an endständige Carboxyl- bzw. Hydroxylgruppen. Setzt man Polyester mit niedriger Säurezahl ein und arbeitet bei höheren Temperaturen, vorzugsweise oberhalb von 170°C, so spaltet sich das Dicyclopentadien in zwei Moleküle Cyclopentadien, welches sich an Ethylendicarbonsäureester-Strukturen anlagert Diese Strukturen lassen sich auch durch den Einsatz von Endomethylentetrahydrophthalsäure oder deren Anhydrid erzeugen. Der Hauptvorteil derartiger Polyesterharze liegt in der hohen Temperaturbeständigkeit entsprechender gehärteter Formkörper.
   2. Styrolische Lösungen von ungesättigten Polyestern, die eine Säurezahl von weniger als 20, insbesondere von weniger als 10 aufweisen. Infrage kommen dabei Polyester mit der oben beschriebenen Zusammensetzung. Polyester mit einer Säurezahl von weniger als 20 erhält man dadurch, daß man bei der Herstellung der Polyester mit einem starken Diolüberschuß arbeitet oder monofunktionelle Alkohole, z.B. 2-Ethylhexanol oder Stearylalkohol einkondensiert. Derartige ungesättigte Polyester ergeben Harze mit besonders niedriger Viskosität und gutem Tränkverhalten. Sie können mit Diisocyanaten kettenverlängert werden und ergeben dann flexible Formkörper.
   3. Lösungen von ungesättigten Polyestern in Hydroxylgruppen enthaltenden Monomeren. Als Monomere kommen z.B. Hydroxyethyl(meth)acrylat, Hydroxypropyl(meth)acrylat, Trimethylolpropanmono(meth)acrylat, Trimethylolpropandi(meth)acrylat, Glycerinmono-(meth)acrylat und Glycerindiacrylat in Frage. Der Vorteil solcher Harze ist, daß durch Einsatz der genannten Monomeren auf das nicht unbedenkliche Styrol verzichtet werden kann, und daß sie eine gute Anbindung an Füllstoffe ermöglichen. Setzt man derartigen Harzen z.B. Magnesiumoxid allein zu, so erhält man harzlösliche Icnomere, die keine ausreichende Eindickung bewirken können.
B. Die erfindungsgemäße Formmasse enthält 0,1 bis 20, vorzugsweise 0,5 bis 15 Gew.-Teile, bezogen auf A, eines mit A verträglichen, Säuregruppen enthaltenden thermoplastischen Vinylpolymeren mit einer Säurezahl zwischen 20 und 150, insbesondere zwischen 30 und 80 und einem K-Wert zwischen 15 und 60, insbesondere zwischen 20 und 40.
   Geeignete Vinylpolymere sind z.B. Copolymerisate von Vinylestern, wie Vinylacetat und Vinylpropionat mit ungesättigten organischen Säuren, wie Crotonsäure, Acrylsäure, Methacrylsäure, Maleinsäure, Maleinsäurehalbestern und Vinylsulfonsäuren. Auch entsprechende Copolymerisate von anderen Vinylmonomeren, wie Vinylpyrrolidon, Vinylcaprolactam, Methylmethacrylat, tert.-Butylacrylat und Styrol mit ungesättigten Säuren können eingesetzt werden. Geeignet sind auch Block- und Pfropfcopolymerisate von thermoplastischen Vinylpolymeren mit den genannten ungesättigten Säuren, sowie teilweise hydrolysierte Polyvinylester. Die Vinylpolymeren können nach üblichen Verfahren durch radikalische Polymerisation in Masse, Lösung, wäßriger Suspension oder Emulsion hergestellt werden.
C. Die Formmasse enthält 0,1 bis 10, vorzugsweise 0,5 bis 8 Gew.-Teile, bezogen auf A, eines üblichen Eindickmittels auf Basis einer basischen Metallverbindung. Bevorzugt sind dabei Oxide, Hydroxide, Alkoholate und Salze organischer Säuren von Metallen der 1. bis 3. Hauptgruppe, insbesondere MgO, Mg(OH)₂, CaO, Ca(OH)₂, BaO, Li₂O, LiOH, Mg- und Al-Alkoholate, Al-Ethylhexanoat und Al-Benzoat. Geeignet sind auch einige Übergangsmetallverbindungen, wie z.B. ZnO.
   Wie bei ungesättigten Polyesterharzen bekannt, läßt sich auch hier die Eindickung durch Zusatz von polaren Verbindungen beschleunigen, z.B. durch Hydroxylverbindungen, wie Wasser, Propylenglykol, Glycerin, durch Carbonsäuren und deren Anhydride, wie Benzoesäure, Cyclohexancarbonsäure, Hexahydrophthalsäureanhydrid, sowie durch Halogenide, wie Cholinchlorid und Lithiumhalogenide.
D. Als Polymerisationsinitiatoren werden übliche, bei Temperaturen oberhalb von 50°C in Radikale zerfallende Peroxide eingesetzt, deren Halbwertszeit bei 50°C größer als 100 h ist. In Frage kommen Diacylperoxide, Peroxydicarbonate, Peroxyester, Perketale, Ketonperoxide, Hydroperoxide und Dialkylperoxide. Beispielhaft seien genannt: Succinylperoxid, Diacetylperoxid, Benzoylperoxid, t-Butylperoktoat, p-Chlorbenzoylperoxid, t-Butylperisobutyrat, 3, 5, 5-Trimethylcyclohexanonperketal, 2, 5-Dimethylhexan-2,5-diperbenzoat, t-Butylperacetat, t-Butylperisononanat, Di-t-butyl-diperphthalat, 2,2-Bis-(t-butylperoxy)-butan, t-Butylperbenzoat, Dicumylperoxid, 2,5-Di-methyl-2,5-bis-(t-butylperoxy)-hexan, t-Butylhydroperoxid, Cumolhydroperoxid, Di-t-butylperoxid, 2,5-Dimethyl-2,5-bis-(t-butylperoxy)-hexin, 1,1,4,4,7, 7-Hexamethyl-cyclo-4,7-diperoxynonan, Diamylperoxid, t-Butylperethylhexanoat, Di-lauroylperoxid, t-Butylcumylperoxid, y-t-Butylperoxyvalerolacton, Dimyristylperoxydicarbonat, Bis(4-t-butylcyclohexyl)-peroxydicarbonat. Auch CC-labile Verbindungen und Azoverbindungen sind geeignet. Nicht geeignet sind Initiatoren, die unterhalb von 50°C zerfallen. Sie verringern die Lagerstabilität und führen zu vorzeitiger Gelierung der Formmasse. Ein Beispiel für einen derartigen Initiator ist Acetylacetonperoxid. Die sogenannten kalthärtenden Systeme haben ebenfalls eine zu geringe Lagerstabilität.
   Die Polymerisationsinitiatoren werden in Mengen von 0,01 bis 5, vorzugsweise von 0,5 bis 3 Gew.-Teilen, bezogen auf A, zugesetzt.
E. Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern mit einer Länge von bis zu 5 cm oder als gemahlene Fasern vorliegen, bevorzugt aber als Langfasern in Form von Einzelrovings, Bahnen aus parallelen Rovings, Fasermatten, Faservliese, Fasergewebe oder Fasergewirke.
   Die Fasern werden in Mengen von 10 bis 400 Gew.-%, vorzugsweise von 30 bis 350 Gew.-%, bezogen auf A, eingesetzt. Bei Glasfasermatten beträgt der besonders bevorzugte Glasgehalt 100 bis 300 Gew.-%, bezogen auf A, bei Rovings 30 bis 150 Gew.-% und bei unidirektionalen Fasergelegen 150 bis 350 Gew.-%.
   Geeignete Füllstoffe sind z.B. übliche feinpulvrige oder körnige Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen. Ihr Gehalt beträgt vorzugsweise 10 bis 300 Gew.-%, bezogen auf A.
F. Als weitere Zusatzstoffe kommen die üblichen Inhibitoren, insbesondere Phenole, Chinone oder Nitrosoverbindungen, Gleitmittel, wie z.B., Wachse, Paraffine zur Vermeidung der Oberflächenverdunstung, sowie Flammschutzmittel und Formtrennmittel in Frage.

Die erfindungsgemäßen Formmassen sind eingedickte, klebfreie, unvernetzte, lagerstabile Massen, die in flächiger, teigiger oder granulierter Form vorliegen können. Ihre Viskosität mit 150 Teilen Calciumcarbonat (Millicarb®) auf 100 Teile A+B bei 23°C soll mindestens 500.000 mPa·s, vorzugsweise mindestens 4.000.000 mPa·s, betragen, gemessen mit einem Brookfield-Viskosimeter.

Bei geringerer Viskosität können die Massen nicht mehr als klebfrei bezeichnet werden, man bekommt dann Schwierigkeiten bei der Verarbeitung. Bevorzugt soll die Viskosität zwischen 2 · 10⁶ und 200 · 10⁶ mPa·s liegen. Oberhalb von 200 · 10⁶ mPa·s sind die Massen schon fest und hart, auch hier bekommt man Schwierigkeiten mit der Verarbeitung. Solche festen Massen können grundsätzlich durch Erhöhung der Temperatur verarbeitet werden, wobei aber dann die Gefahr vorzeitiger Vernetzung auftritt, bevor das Werkzeug vollständig gefüllt ist.

Unvernetzt bedeutet, daß kein dreidimensionales Molekülnetzwerk mit Atombindungen vorliegen darf. Praktisch kann die Vernetzung dadurch festgestellt werden, daß man versucht, die Masse in geeigneten organischen Lösungsmitteln, vorzugsweise in Dimethylformamid, Dimethylsulfoxid oder Aceton, gegebenenfalls unter Erwärmen, zu lösen. Dabei dürfen höchstens 10 Gew.%, vorzugsweise weniger als 1 Gew.% der Masse, mit Ausnahme natürlich der Verstärkungsfasern und Füllstoffe, als unlöslicher Rückstand verbleiben.

Lagerstabil bedeutet, daß die Formmasse bei mindestens eintägiger Lagerung bei Raumtemperatur noch unvernetzt, d.h. löslich nach obiger Definition sein muß. Vorzugsweise sind die erfindungsgemäßen Formmassen länger lagerfähig, beispielsweise mehr als 30 Tage.

Ein bevorzugtes Verfahren zur Herstellung der erfindungsgemäßen Formmassen besteht darin, daß man die Komponenten A, B, D, E und F (mit Ausnahme von langen Verstärkungsfasern) vermischt, bei Temperaturen unterhalb von 50°C die Komponente C zusetzt und dadurch die Eindickung einleitet, gegebenenfalls die noch fließfähige Masse auf Verstärkungsfasern aufbringt und dann die Eindickung zu Ende führt. Zur Beschleunigung der Eindickung kann es in manchen Fällen zweckmäßig sein, die Masse kurzzeitig auf Temperaturen unterhalb von 100°C, vorzugsweise unterhalb von 50°C zu erwärmen. Die vollständige Eindickung der Masse ist vorzugsweise in wenigen Stunden praktisch beendet.

Es wird angenommen, daß beim Zusatz des Eindickmittels C dieses mit den Säuregruppen des Vinylpolymeren B zu einem Ionomeren reagiert, welches mit dem Harzsystem unverträglich ist, sich ausscheidet und dadurch die Viskosität erhöht. Im Gegensatz zur Eindickung üblicher ungesättigter Polyesterharze steigt hier nach zusatz des Eindickmittels die Viskosität verhältnismäßig rasch an und bleibt dann nach Erreichen des Maximalwertes praktisch konstant.

Die eingedickten Massen können längere Zeit bis zur Verarbeitung gelagert werden, wobei sie z.B. aufgewickelt, gestapelt oder auch verpackt werden können. Zur Verarbeitung der Formmassen kommen das Pressen, Spritzpressen, Spritzgießen und Tiefziehen in Frage, wobei die Härtung bei Temperaturen oberhalb von 50°C, vorzugsweise zwischen 80 und 200°C und insbesondere zwischen 120 und 180°C durchgeführt wird.

Die in den Beispielen genannten Teile und Prozente beziehen sich auf das Gewicht.

### Herstellung der ungesättigten Polyesterharze A

### Harz 1:

Ein ungesättigter Polyester mit Säurezahl 17, mittleres Molekulargewicht etwa 2000 und Schmelzviskosität (125°C) von 740 [mPa·s] wurde aus Maleinsäureanhydrid und Dipropylenglykol (Molverhältnis 1:1,08) durch Kondensation bei 185 bis 200°C hergestellt. Er wurde 65 %ig in 2-Hydroxyethylmethacrylat gelöst und mit 200 ppm Toluhydrochinon stabilisiert.

### Harz 2:

Ein ungesättigter Polyester mit Säurezahl 11 und mittlerem Molekulargewicht von etwa 1300 wurde hergestellt durch Umsetzung von Maleinsäureanhydrid und Propylenglykol im Molverhältnis 1:1,28. Er wurde 65 %ig in Styrol gelöst und mit 120 ppm Hydrochinon stabilisiert.

### Harz 3:

Ein ungesättigter Polyester mit Säurezahl 28 wurde in einem zweistufigen Verfahren hergestellt, bei dem im ersten Schritt äquimolare Mengen Dicyclopentadien und Maleinsäure bei 125 bis 135°C zum Maleinsäurehalbester umgesetzt und im Folgeschritt mit Ethylenglykol bei 190°C kondensiert wird. Die Einsatzstoffe weisen ein Molverhältnis Maleinsäure : Dicyclopentadien : Ethylenglykol wie 1:1:0,55 auf. Der ungesättigte Polyester wurde 80 %ig in Styrol gelöst und mit 85 ppm Hydrochinon stabilisiert.

### Harz 4:

Ein ungesättigter Polyester mit Säurezahl 27 wurde hergestellt durch Umsetzung von Maleinsäureanhydrid und Dipropylenglykol im Molverhältnis 1:1. Er wurde 65 %ig in 2-Hydroxyethylmethacrylat gelöst und mit 200 ppm Toluhydrochinon stabilisiert.

### Herstellung der Vinylpolymeren B

Polymer B1 wurde durch Lösungspolymerisation bei 78°C in Ethanol hergestellt, wobei die Monomeren und 0,8 % tert.-Butylperpivalat, bezogen auf die Monomeren, getrennt innerhalb von 6 Stunden zudosiert wurden. Nach beendeter Reaktion wurde das Lösungsmittel im Vakuum entfernt und der Rückstand in 2-Hydroxyethylmethacrylat gelöst und mit 100 ppm Hydrochinon sowie 200 ppm Dimethylchinon stabilisiert.

Die Polymeren B2 bis B5 wurden durch Suspensionspolymerisation in Wasser bei etwa 90°C hergestellt, wobei 0,7 % tert.-Butylperoctoat als Initiator diente. Im Anschluß an die Polymerisation erfolgte eine Wasserdampfdestillation und die Isolierung der Polymerteilchen in Festform. Sie wurden getrocknet, in eine Monomeren bei ca. 80°C gelöst und mit 100 ppm Hydrochinon sowie 200 ppm Dimethylchinon stabilisiert.

**Tabelle 1**

| Aufbau und Kenndaten der Polymeren B | | | |
|---|---|---|---|
| Polymer | Monomere (Gew.-%) | K-Wert* | Säurezahl** |
| B1 | Tert.-Butylacrylat (90) | 25,1 | 65 |
| | Methacrylsäure (10) | | |
| B2 | Vinylacetat (83,6) | 29,7 | 45 |
| | Crotonsäure (6,4) | | |
| B3 | Vinylacetat (50) | 36 | 66 |
| | Vinylpropionat (40) | | |
| | Crotonsäure (10) | | |
| B4 | Vinylacetat (90) | 36 | 66 |
| | Crotonsäure (10) | | |
| B5 | Vinylacetat (98,8) | 35 | 7,5 |
| | Crotonsäure (1,2) | | |

| | | | |
|---|---|---|---|
| * Der K-Wert wurde nach DIN 51 562 in Cyclohexanon (1 %ig) ermittelt. | | | |
| ** Die Säurezahl wurde nach DIN 33 402 acidimetrisch bestimmt. | | | |

**Tabelle 2**

| Zusammensetzung und Viskosität der Polymerlösungen Patentbeispiele | | | | |
|---|---|---|---|---|
| Polymerlösung | Polymer (%) | Monomer | (%) | Viskosität bei 23°C [maP·s] |
| 1 | B1 (40) | 2-Hydroxyethylmethacrylat | (60) | 4500 |
| 2 | B2 (40) | 2-Hydroxyethylmethacrylat | (60) | 5005 |
| 3 | B3 (40) | Styrol | (60) | 8084 |
| 4 | B4 (25) | Styrol | (75) | 7557 |
| 5 Vergleich | B5 (40) | 2-Hydroxyethylmethacrylat | (60) | 7909 |

### Patentbeispiele

a) Zur Prüfung des Eindickverhaltens der Polyesterharze wurden jeweils 100 Teile Harzsysteme mit Füllstoffkreide (Millicarb®) und Mgo-Paste Luvatol MK35 (Fa. Lehmann & Voss) intensiv verrührt und dicht verschlossen bei 23°C gelagert. Nach unterschiedlichen Lagerzeiten wurde die Viskosität der Zubereitungen mit Hilfe des Viskosimeters HBT-D, Modell DV-II (Fa. Brookfield) gemessen. Die Ergebnisse sind in Tabelle 3 zusammengefaßt. Sie zeigen, daß die Zubereitungen auf Basis säuremodifizierter Polymerer gemäß der Erfindung sehr schnell zu trockenen Massen eindicken, die leicht zu handhaben sind. Ohne diese Modifizierung (Vergleichsversuche 3, 6 und 11) erfolgt keine ausreichende Eindickung, die Zubereitungen bleiben flüssig oder klebrig. Dies ändert sich auch nicht, wenn statt der erfindungsgemäßen Polymeren solche mit niedrigerer Säurezahl eingesetzt werden, wie sie für die Schrumpfkompensation von UP-Harzformmassen üblich sind (Vergleichsbeispiele 4 und 5). 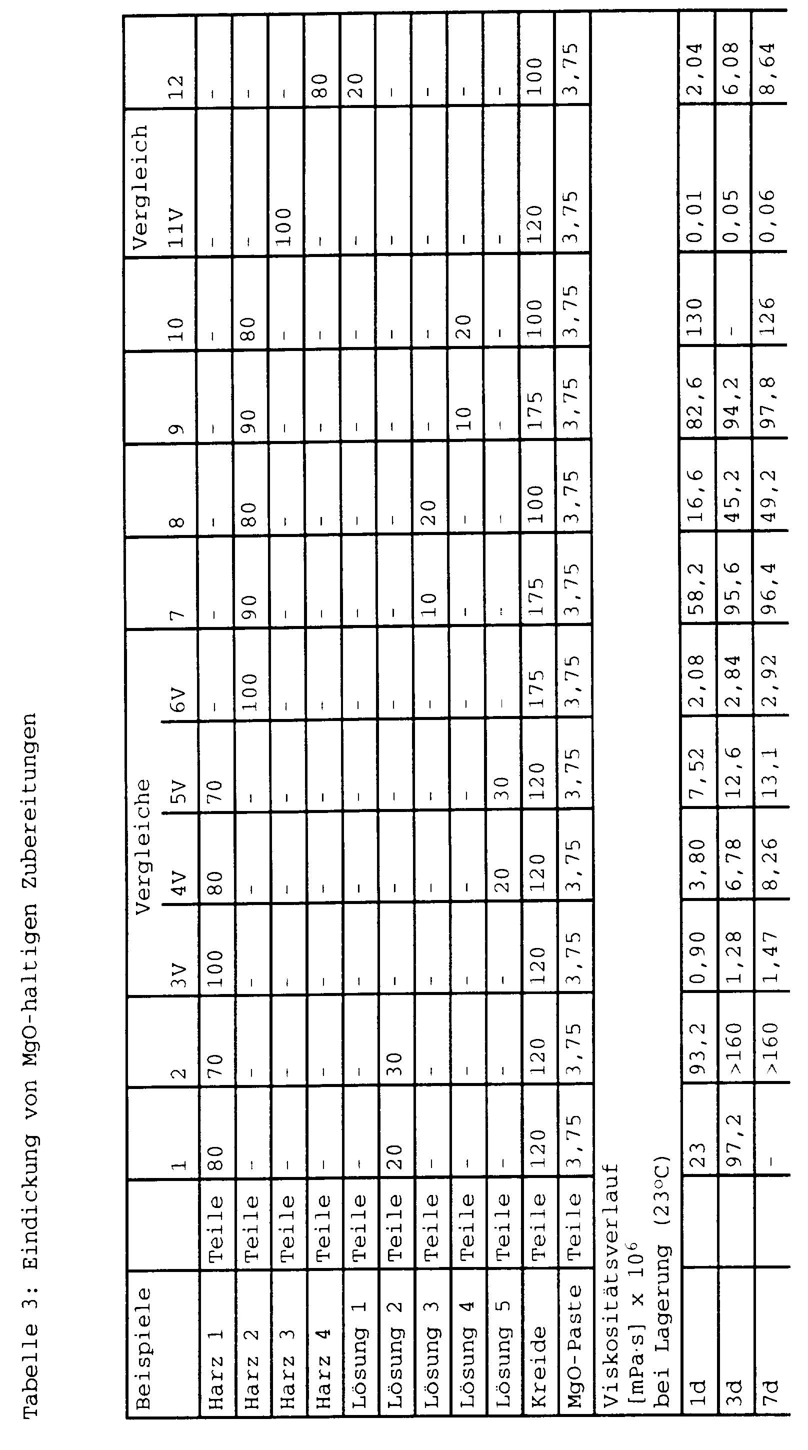 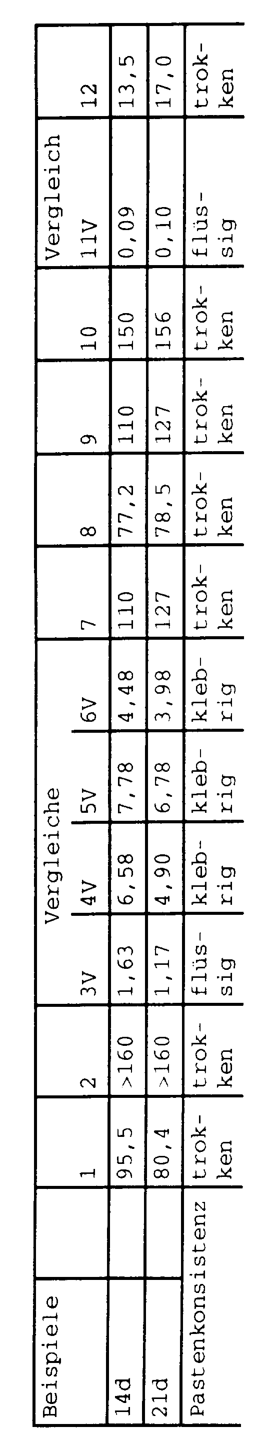
b) Herstellung und Verarbeitung von SMC

### Beispiel 13

Eine Harz-Füllstoffmischung wurde aus folgenden Komponenten mit einem schnell laufenden Rührwerk hergestellt:
- 84: Teile Harz 4
- 16: Teile Polymerlösung 2
- 170: Teile Füllstoff Kreide (Millicarb®)
- 1,5: Teile tert.-Butylperbenzoat
- 4,0: Teile Zinkstearat
- 4,0: Teile Luvatol MK 35, Mgo-Paste (Lehmann & Voss)

Diese Mischung wurde mit Hilfe einer SMC-Versuchsanlage zu SMC verarbeitet, das 28 Gew.-% geschnittene Glasfaserrovings (2,5 cm Länge) enthielt und zwischen Polyethylenfolien 5 Tage gelagert wurde. Nach Entfernen der Abdeckfolien ließ sich das eingedickte Halbzeug in einem polierten Stahlwerkzeug (Abmessungen 0,4 x 58 x 25 cm) bei 145°C 5 min unter 80 bar verpressen. Es resultierte ein gehärteter Formstoff mit glatter Oberfläche und folgenden Eigenschaften:

| | |
|---|---|
| Zug-E-Modul (DIN 53 445) : | 13,28 [kN/mm] |
| Zugfestigkeit : | 78,6 [N/mm] |
| Dehnung : | 3,35 [%] |
| Schlagzähigkeit (DIN 53 453) : | 55,74 [kJ/m] |

## Patentansprüche

1. Härtbare, eingedickte Formmasse, enthaltend
A. 100 Gew.-Teile eines ungesättigten Polyesterharzes, welches ohne Zusatz des Vinylpolymeren B mit der basischen Metallverbindung C allein nicht klebfrei eindickt, ausgewählt aus:
I. einer styrolischen Lösung eines ungesättigten Polyesters, der entweder
a. Cycloalkenyl- oder Cycloalkylgruppen enthält, oder
b. eine Säurezahl von weniger als 20 aufweist, und
II. einer Lösung eines ungesättigten Polyesters in einem Hydroxylgruppen enthaltenden Monomeren.
B. 0,1 bis 20 Gew.-Teile eines mit A verträglichen, Säuregruppen enthaltenden thermoplastischen Vinylpolymeren mit einer Säurezahl (nach IN 53 402) zwischen 20 und 150 und einem K-Wert (nach DIN 51 562, Teile 1 und 3) zwischen 15 und 60,
C. 0,1 bis 10 Gew.-Teile einer basischen Metallverbindung als Eindickmittel,
D. 0,01 bis 5 Gew.-Teile eines Polymerisationsinitiators, dessen Halbwertszeit bei 50°C größer als 100 h ist,
E. 10 bis 400 Gew.-Teile Verstärkungsfasern und/oder Füllstoffe,
sowie gegebenenfalls
F. weitere übliche Zusatzstoffe.

## Claims

1. A curable thickened molding compound containing
A. 100 parts by weight of an unsaturated polyester resin which without the addition of the vinyl polymer B does not give tack-free thickening with the basic metal compound C alone, selected from
I. a styrenic solution of an unsaturated polyester which either
a. contains cycloalkenyl or cycloalkyl groups, or
b. has an acid number of less than 20, and
II. a solution of an unsaturated polyester in a hydroxyl-containing monomer,
B. from 0.1 to 20 parts by weight of a thermoplastic vinyl polymer which is compatible with A, contains acid groups to an acid number (as defined in DIN 53 402) of from 20 to 150, and has a K value (as defined in DIN 51 562 Parts 1 and 3) of from 15 to 60,
C. from 0.1 to 10 parts by weight of a basic metal compound as thickener,
D. from 0.01 to 5 parts by weight of a polymerization initiator whose half-life at 50°C is longer than 100 h,
E. from 10 to 400 parts by weight of reinforcing fibers and/or fillers, and optionally
F. further customary additives.

## Revendications

1. Masse de moulage épaissie durcissable contenant :
A. 100 parties en poids d'une résine polyester insaturée, qui sans apport du polymère de vinyle B avec le composé métallique C basique ne s'épaissit pas seule, sans effet adhésif, sélectionnée parmi :
I. une solution styrolique d'un polyester insaturé, qui
a. soit contient des groupes cycloalcényle ou cycloalkyle, soit
b. présente un indice d'acide inférieur à 20, et
II. une solution d'un polyester insaturé dans un monomère contenant des groupes hydroxyle.
B. De 0,1 à 20 parties en poids d'un polymère de vinyle thermoplastique compatible avec A, contenant des groupes acide, ayant un indice d'acide (suivant DIN-53 402) compris entre 20 et 150 et un indice K (suivant DIN-51562, parties 1 et 3) compris entre 15 et 60,
C. de 0,1 à 10 parties en poids d'un composé métallique basique comme agent épaississant,
D. de 0,01 à 5 parties en poids d'un initiateur de polymérisation dont la demie-vie à 50°C est supérieure à 100 heures,
E. de 10 à 400 parties en poids de fibres de renforcement et/ou de charges,
ainsi que, le cas échéant,
F. d'autres additifs usuels.
